# DEMANDE DE BREVET EUROPEEN

(11) **EP 1 037 331 A1**
(43) Date de publication de la demande: **20.09.2000**
(21) Numéro de dépôt: 00400713.4
(22) Date de dépôt: 15.03.2000
(51) Int. Cl.: H01R 13/73

(54) **Bôite perfectionnée pour socle de prise de courant**

(30) Priorité: 15.03.1999 ES 9900656
(71) Demandeur: Schneider Electric Espana, S.A., 08007 Barcelona (ES)
(72) Inventeur: Legaria Benito, Antonio, 31180 Cizur Mayor (Navarra) (ES)
(74) Mandataire: Thévenet, Jean-Bruno

(57) **Abrégé**

Cette boîte pour socle de prise de courant, formée d'un corps de boîte (1) avec un fond (2) dans lequel sont définis des logements pour les bornes (3) et (4) de connexion électrique et de prise de terre, et qui peut se monter dans deux positions angulaires différentes, possède, à travers le fond (2), en position centrale, un orifice (10), pour la fixation par vissage de la boîte (1) sur un support classique, ledit orifice étant déterminé par des conduits (10.1) et (10.2) parallèles mais déphasés, dont le conduit (10.1) coïncide avec l'orifice de vissage du support classique correspondant dans l'une des deux positions angulaires de la boîte (1) ; tandis que le conduit (10.2) coïncide dans l'autre position angulaire, en permettant d'établir la fixation de la boîte (1) par vissage dans l'une quelconque des deux positions.

## Description

Les socles de prises de courant qui se montent dans les installations électriques pour la fonction de ce qu'on connaît comme branchements, comprennent conventionnellement une boîte de logement des éléments de connexion électrique, sur laquelle s'incorpore un couvercle enjoliveur et de protection, tandis que tout l'ensemble s'accouple en montage par rapport à une carcasse de fixation qui peut être encastrée ou appliquée sur le lieu de l'installation.

Selon une solution particulière, comme celle que l'on trouve dans le modèle d'utilité espagnol 9801073 de la même demanderesse que la présente invention, la boîte de logement des éléments de connexion électrique est réalisée dans une forme qui permet un accouplement dans différentes positions de montage par rapport à la carcasse de fixation, la boîte mentionnée étant pourvue de formations pour l'accouplement du couvercle et pour la fixation par rapport à la structure de support par des encliquetages élastiques.

Néanmoins, pour l'application de la boîte dans les installations déjà existantes, avec des couvercles de recouvrement et des structures de fixation classiques, le montage doit être réalisé avec fixation par vissage, ce qui exige que la boîte comprenne des moyens adéquats pour cela.

Dans ce sens, selon la présente invention, on propose une boîte pour les socles de prises de courant mentionnées, du type à positionnement variable dans le montage, étant prévue cependant dans une forme telle qu'elle soit adaptable à son application avec des couvercles et des structures de support classiques, en pouvant se placer également de manière sélective dans le montage.

Cette boîte objet de l'invention détermine un fond avec des logements pour les bornes de la connexion électrique et pour une borne de prise de terre, avec recouvrement dudit fond au moyen d'un couvercle intérieur qui ferme les logements, cependant qu'il se forme en position centrale à travers l'ensemble un double orifice traversant dont les conduits correspondent avec l'amarrage de la fixation par vissage dans les positions respectives de la situation angulaire sélective de la boîte dans le montage.

De cette manière, la boîte est également adaptable dans les différentes positions de montage dans son application avec des couvercles de recouvrement et des structures de fixation classiques, puisque le double orifice traversant à travers la zone centrale permet l'insertion de l'élément de fixation dans la correspondance adéquate avec l'accouplement à vis dans chacun des positionnements sélectifs de montage dans l'installation.

La polyvalence d'application que la boîte acquiert avec ceci lui confère un caractère réellement avantageux qui la rend préférable dans son application.

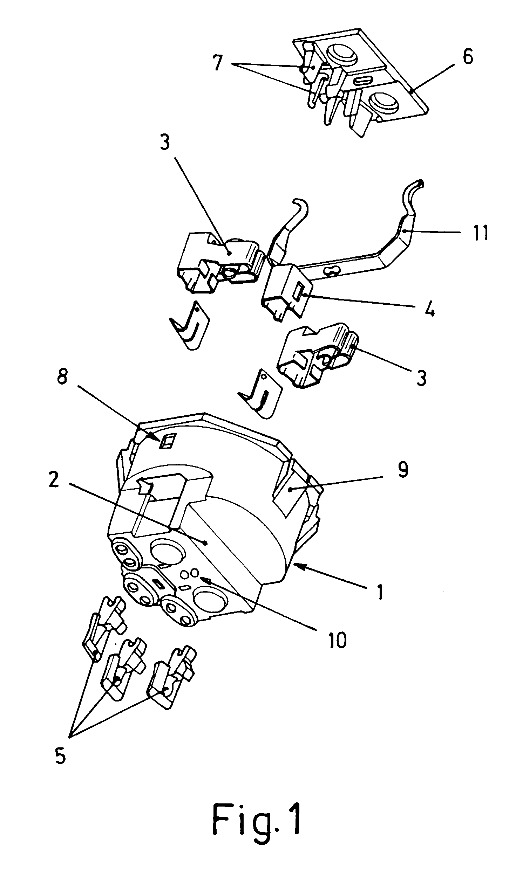

La figure 1 représente une perspective en démontage éclaté de l'ensemble de la boîte préconisée.

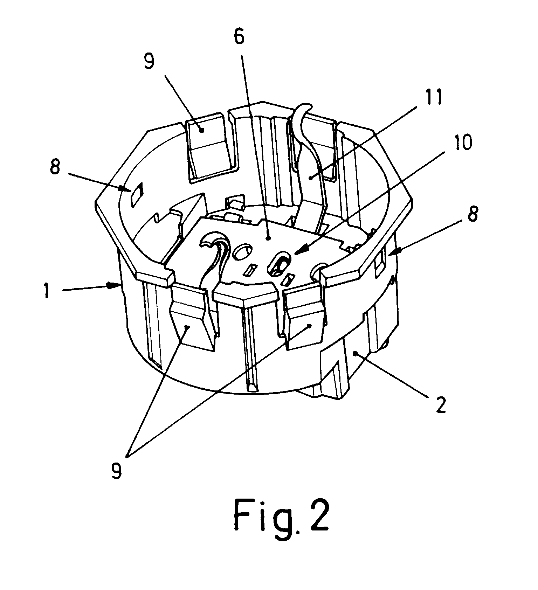

La figure 2 est une perspective vue depuis la partie supérieure de l'ensemble de la boîte montée.

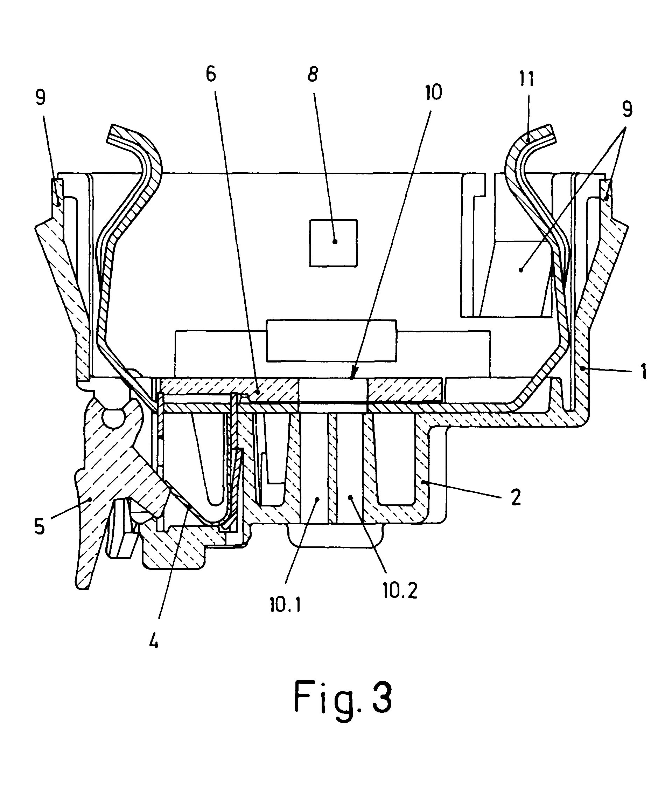

La figure 3 est une vue en coupe agrandie de ladite boîte préconisée.

L'objet de l'invention se rapporte à une boîte pour socle de prise de courant du type de celles que l'on pose pour les raccordements par branchement dans les installations électriques.

Ladite boîte consiste en un corps de boîte (1) déterminant un fond (2) dans lequel sont définis des logements pour les bornes respectives (3) de la connexion électrique et pour une borne (4) de la prise de terre, lesquelles peuvent être actionnées, pour établir la connexion et déconnexion des câbles, au moyen de commandes à pression (5) qui se trouvent à l'extérieur.

Le fond (2) se ferme à la partie supérieure au moyen d'un couvercle intérieur (6) qui recouvre les logements des bornes (3) et (4), en établissant en même temps, au moyen de pattes (7) en saillie sur sa face inférieure, la fixation inamovible desdites bornes (3) et (4) dans leur positionnement.

Le corps de boîte (1) détermine en supplément dans la paroi du contour supérieur des évidements (8) pour la fixation par encliquetage d'un couvercle enjoliveur de fermeture correspondant, tandis que dans cette même paroi, sont définies des pattes flexibles (9), au moyen desquelles peut s'effectuer la fixation sur un bâti d'ancrage, la boîte pouvant être incorporée dans différentes positions de montage par rapport au bâti mentionné, grâce à des ensembles respectifs de pattes (9) situés dans deux positions angulaires différentes.

L'incorporation en relation avec des couvercles de fermeture enjoliveurs et structures d'ancrage classiques, pour l'application de la boîte par rapport à des socles de branchement d'installations déjà réalisés, exige la fixation par vissage.

Pour cela, en position centrale en travers du fond (2) de la boîte, est prévu un orifice (10), lequel, selon l'invention, est déterminé de manière double, avec des conduits (10.1) et (10.2) parallèles mais déphasés.

De cette manière, la boîte peut être positionnée d'une manière qui coïncide avec l'ancrage de fixation par vissage par rapport à une structure de fixation classique, dans les deux positions de placement dans le montage, puisque, dans une des positions, elle coïncide avec l'ancrage par vissage du conduit (10.1) tandis que, dans l'autre position angulaire de montage, elle coïncide avec ledit ancrage de vissage de l'autre conduit (10.2).

Avec cela, la boîte peut être adaptée aux socles de branchement d'installations électriques déjà réalisées, en apportant la polyvalence du positionnement de montage, pour le placement dans la position qui se révèle la plus adéquate aux fins de l'insertion des broches de branchement.

L'orifice (10) est évidemment traversant à son tour à travers l'élément conducteur (11) de la borne (4) pour la prise de terre, en passant aussi à travers le couvercle intérieur (6) qui recouvre les logements des bornes (3) et (4), éléments dans lesquels le double conduit (10.1) et (10.2) peut être à son tour défini de manière indépendante ou bien comme un unique orifice (10) élargi transversalement, dans la dimension qui correspond à l'ensemble des deux conduits (10.1) et (10.2).

## Revendications

1. Boîte perfectionnée pour socle de prise de courant, du type formé par un corps de boîte (1) avec un fond (2) dans lequel sont définis des logements pour les bornes (3) et (4) de connexion électrique et de prise de terre, cette boîte (1) pouvant se monter dans deux positions angulaires différentes, caractérisée en ce qu'à travers le fond (2) est défini en position centrale un orifice (10), pour la fixation par vissage de la boîte (1) sur un support classique, ledit orifice étant déterminé par des conduits (10.1) et (10.2) parallèles mais déphasés, dont le conduit (10.1) coïncide avec l'orifice de vissage du support classique correspondant dans l'une des deux positions angulaires de la boîte (1) ; tandis que le conduit (10.2) coïncide dans l'autre position angulaire, en permettant d'établir la fixation de la boîte (1) par vissage dans l'une quelconque des deux positions.
